# EUROPEAN PATENT APPLICATION

(11) **EP 2 648 166 A2**
(43) Date of publication of application: **09.10.2013**
(21) Application number: 13159026.7
(22) Date of filing: 13.03.2013
(51) Int. Cl.: G07F 7/08, H01R 13/28

(54) **Recognizing wares in a shop**

(30) Priority: 15.03.2012 IT PN20120013
(71) Applicant: Promocolor 2 s.r.l., 33052 Cervignano (UD) (IT)
(72) Inventor: Zamarian, Ludovico, 30028 San Michele al Tagliamento (IT)
(74) Representative: Dalla Rosa, Adriano

(57) **Abstract**

System for checking, processing and managing electronically data for recognizing wares of various kind and the clients purchasing them into supermarkets, stores, shops and the like of the self-service type, and for checking if all the wares purchased by such clients have been paid. System comprising at least a central server (24) equipped with a master microprocessor (25) and a RAM storage (26), interconnected with all the component parts of the system and operating by transmitting and receiving radio-frequency signals coded in digital mode, for checking all the component parts and for carrying out a plurality of functions, set in advance into the central server (24).

## Description

The invention relates to a system for checking, processing and managing electronically data for recognizing wares of various kind and the clients purchasing them into supermarkets, stores, shops and the like of the self-service type, and for checking if all the wares purchased by such clients have been paid, wherein the wares are replaced into shelvings, shelves and into containers of various kind situated in supermarkets, stores, shops, etc. and are picked up by the clients and placed on to possible movable trucks of traditional type, and wherein all the clients are identified by suitable recognizing systems and the total prices of every purchased ware are detected and paid in the exit area of the supermarkets, stores, shops, etc..

At the present time, persons who intend to purchase wares of different kind into supermarkets, stores, shops and the like of self-service type, pick up themselves the wares to purchase placed on to shelvings, shelves and into the existing containers and, if the wares which have been picked up are many and fill many space, normally they put down them into the appropriate movable support trucks of traditional type and, when all the desired wares have been purchased, they pass at the cash desks situated in the exit areas of such supermarkets, stores, shops etc., where the prices of all the wares are read and registered and paid by the clients, which bring back the movable trucks in the relative deposit zones.

This set of operations involves a set of disadvantages both for the clients and for the personnel of supermarkets, stores, shops, etc..

In fact, in the case of the clients, they often must stand at the cash desks for waiting times more or less long, due in part to the presence of other clients which are waiting their turn to pay, and in part also to the necessary times for the direct payment of the wares by the same clients, as this operation inevitably involves at first the optical reading and the registration by the cashiers of the prices of all the purchased wares and then the exchange of money with the same cashiers for the effected purchase. In the case of personnel, moreover, while operating times required by the cashiers to carry out the above described operations are more or less long, for the other personnel there is required periodically to check the amounts and the kinds of the purchased wares, even for providing to arrange into the relative shelvings, the shelves and the containers the new wares to be purchased, from which the purchased wares have been picked up.

The object of the present invention is to eliminate almost completely the specified disadvantages, by facilitating and simplifying as well as by shortening the required times for the above described operations, by means of a system for checking, processing and managing electronically data according to the same invention, provided for recognizing both the wares of various kind to be purchased and that purchased from time to time, and the clients who purchase them into supermarkets, stores, shops and the like of the self-service type, and the automatic checking if all the wares purchased by such clients have been paid.

The invention will be better understood by the following description, given by way of not-limitative example only, of the characteristics of the electronic checking system according with the same invention, with particular reference to the attached patent claims, and to the accompanying drawings in which:
- Fig.1 schematically shows the interior arrangement of a supermarket, store, shop etc. of the self-service type with the different areas of entrance, wares storage, video checking, exit, identifying and recognizing of the clients and the wares, etc., according to the present invention ;
- Fig. 2 schematically shows the same interior arrangement of the Fig. 1, with one client who is entering the supermarket, store, shop etc., through an access area, together with the movable wares transporting truck ;

- Fig. 3 schematically shows the same interior arrangement of Fig.1, with the client transiting inside the supermarket, store, shop etc., and who is picking up a ware from a wares storage area ;
- Fig. 4 schematically shows with the same interior arrangement of Fig.1 the client with the movable transporting truck containing all the purchased wares, who is transiting through an outlet area of the supermarket, store, shop, etc. ;
- Fig.5 shows the electric circuit diagram of the electronic checking system installed into the interior arrangement of Fig.1 and operating on the basis of the method for processing and managing electronically data according to the invention.

The present invention relates to a system for checking, processing and managing electronically data for recognizing wares of various kind and the clients purchasing them into supermarkets, stores, shops and the like of the self-service type, and for checking if all the wares purchased by such clients have been paid.

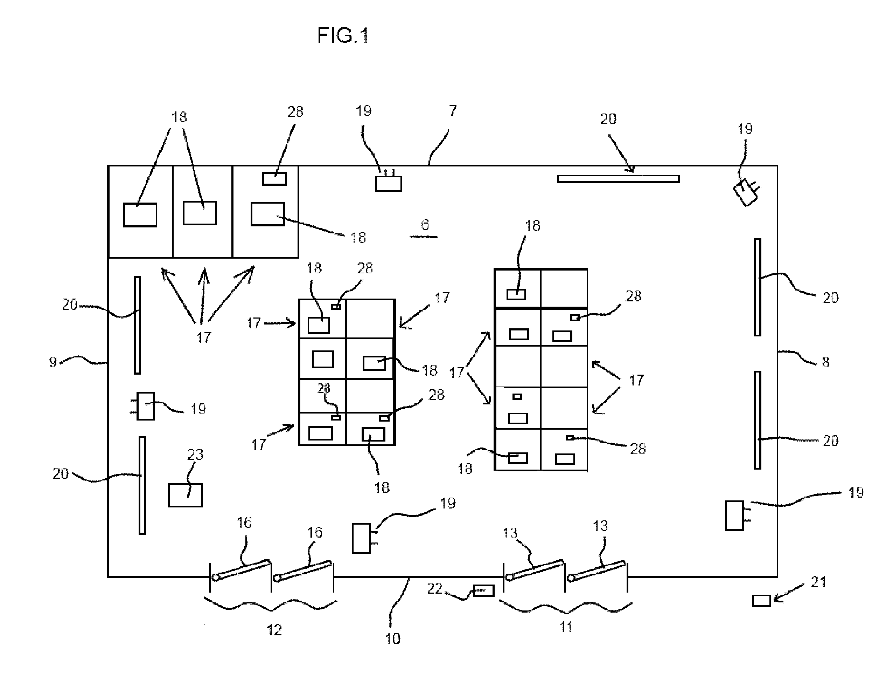

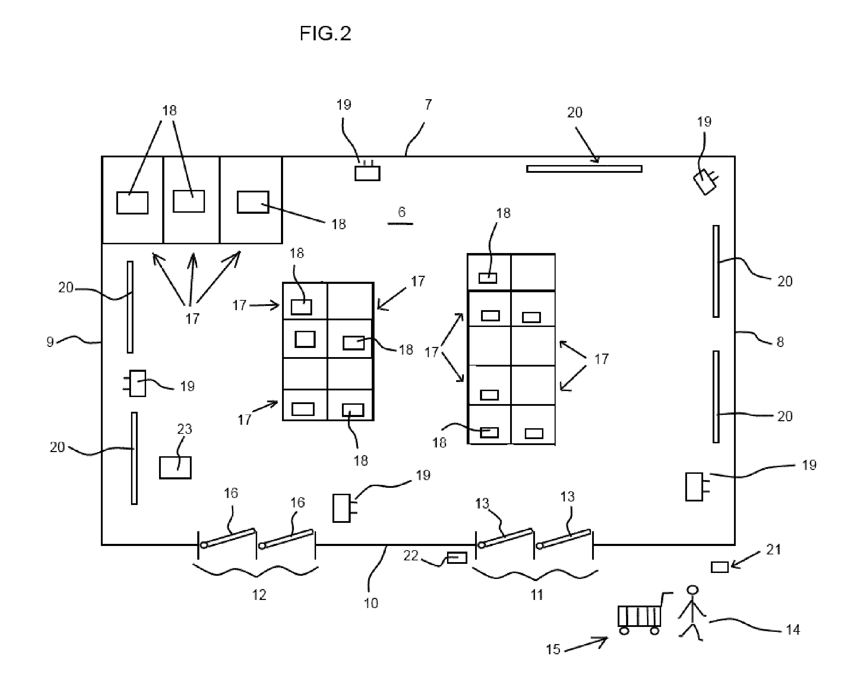

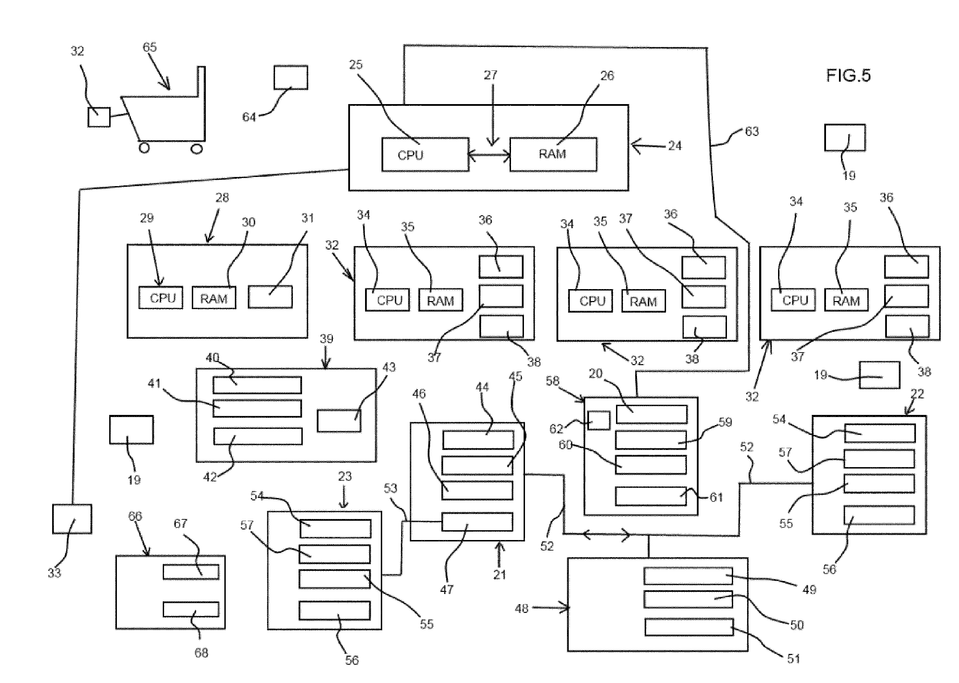

The Fig. 1 schematically represents an example of an interior arrangement into such supermarkets, stores, shops, etc. of the self-service type, with the different inlet zones, the zones for wares storage, video checking, outlet, identifying and recognizing of clients and the wares, etc., whereas in the Figs. 2, 3 and 4 there are represented different operating phases in which one client is entered inside the supermarket, store, shop, etc., through an access area, together with a movable transporting truck, he has picked up the wares to purchase and is passing through an outlet area in which the wares are paid, and finally in the Fig. 5 it is schematically represented the electronic checking system and its above described various component parts, which is installed into the interior arrangement of a supermarket, store, shop etc. of the Fig.1.

Subsequently, it is now described the interior arrangement of a supermarket, store, shop, etc., comprising an inner spacious containing space 6, situated in a floor of an inhabited building, and delimited by a back wall 7, two side walls 8 and 9 and a front wall or barrier 10, in which an access transporting truck ;

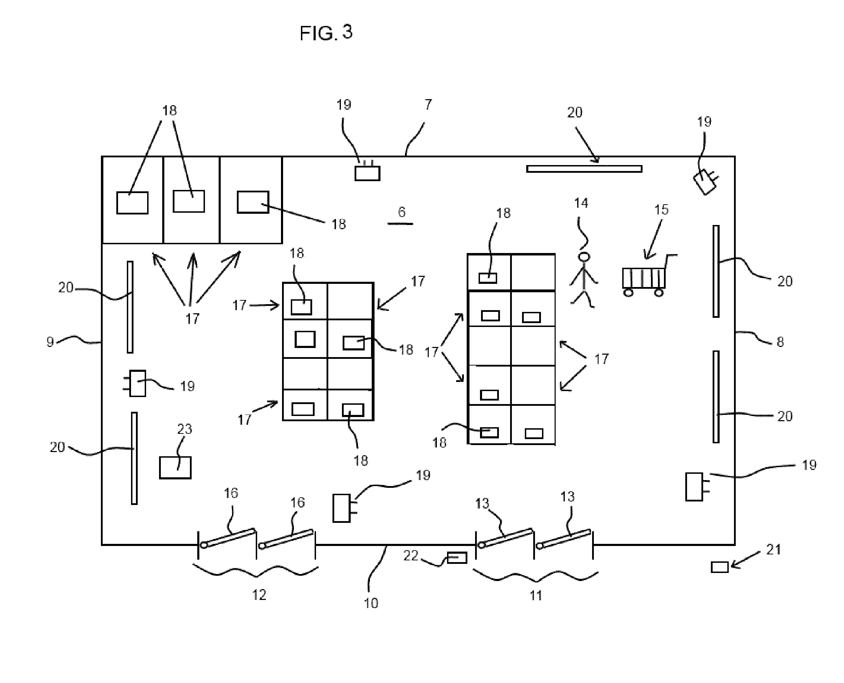

- Fig. 3 schematically shows the same interior arrangement of Fig.1, with the client transiting inside the supermarket, store, shop etc., and who is picking up a ware from a wares storage area ;

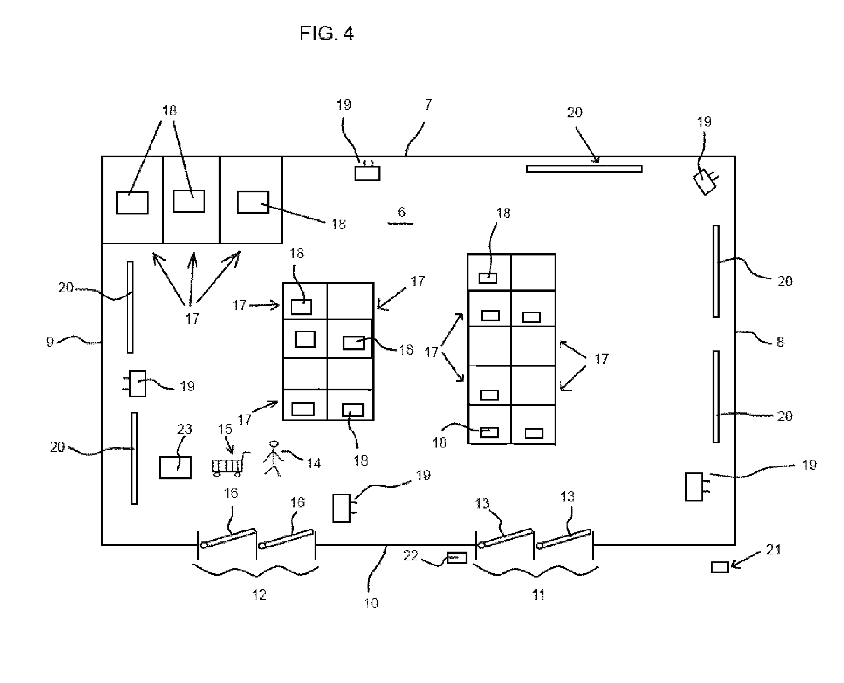

- Fig. 4 schematically shows with the same interior arrangement of Fig.1 the client with the movable transporting truck containing all the purchased wares, who is transiting through an outlet area of the supermarket, store, shop, etc. ;
- Fig.5 shows the electric circuit diagram of the electronic checking system installed into the interior arrangement of Fig.1 and operating on the basis of the method for processing and managing electronically data according to the invention.

The present invention relates to a system for checking, processing and managing electronically data for recognizing wares of various kind and the clients purchasing them into supermarkets, stores, shops and the like of the self-service type, and for checking if all the wares purchased by such clients have been paid.

The Fig. 1 schematically represents an example of an interior arrangement into such supermarkets, stores, shops, etc. of the self-service type, with the different inlet zones, the zones for wares storage, video checking, outlet, identifying and recognizing of clients and the wares, etc., whereas in the Figs. 2, 3 and 4 there are represented different operating phases in which one client is entered inside the supermarket, store, shop, etc., through an access area, together with a movable transporting truck, he has picked up the wares to purchase and is passing through an outlet area in which the wares are paid, and finally in the Fig. 5 it is schematically represented the electronic checking system and its above described various component parts, which is installed into the interior arrangement of a supermarket, store, shop etc. of the Fig.1.

Subsequently, it is now described the interior arrangement of a supermarket, store, shop, etc., comprising an inner spacious containing space 6, situated in a floor of an inhabited building, and delimited by a back wall 7, two side walls 8 and 9 and a front wall or barrier 10, in which an access area 11 and an outlet area 12 are provided, which are spaced away from each other, wherein in the present example the access area is constituted by two movable gates 13 for the transit of the clients and the movable trucks for transporting wares, which in the considered case consist of one client 14 and a movable truck 15, whereas the outlet area is constituted in this example by two movable gates 16. Moreover, into said inner containing space 6 there are provided several shelving, shelves, containers etc... 17 for stocking different wares, which in the example are conveniently spaced away from each other with different positions and arrangements, to allow the various clients and the movable trucks for transporting wares to pass therethrough, wherein by way of example only in every shelving, shelf, container 17 only one ware 18 is shown, but of course it may contain also more wares of the same kind or also of different kinds.

Each ware 18 stocked on to a relative shelving, shelf, container etc.. 17 is marked for being then identified singularly, as it will be shortly described, and in turn each single shelving, shelf, container etc. 17 is provided with means for recognizing the presence or absence of each ware 18 stocked thereon, which means are realized as will be then described, and they are able to detect and to inform the present electronic checking system when each ware is picked up and placed onto the relative movable truck 15, and therefore that such shelving, shelf, container etc. has been emptied of this ware and therefore it requires that a new ware be stocked onto it. Furthermore, a video survey system is mounted in the aforesaid inner containing space 6, and is connected to the present electronic checking system and adapted to survey different areas of the same inner space, and such video survey system is constituted by a set of shooting devices such as video cameras and of possible displays opportunely placed, and in the example constituted by the video cameras 19 arranged as shown, and such shooting devices are adapted to effect the video recording of the movements of all persons who are transiting inside the entire inner space 6.

In the above specified inner space 6, a domotic system may be advantageously mounted in one or more areas of the same space, and connected in the present electronic checking system, which area 11 and an outlet area 12 are provided, which are spaced away from each other, wherein in the present example the access area is constituted by two movable gates 13 for the transit of the clients and the movable trucks for transporting wares, which in the considered case consist of one client 14 and a movable truck 15, whereas the outlet area is constituted in this example by two movable gates 16. Moreover, into said inner containing space 6 there are provided several shelving, shelves, containers etc... 17 for stocking different wares, which in the example are conveniently spaced away from each other with different positions and arrangements, to allow the various clients and the movable trucks for transporting wares to pass therethrough, wherein by way of example only in every shelving, shelf, container 17 only one ware 18 is shown, but of course it may contain also more wares of the same kind or also of different kinds.

Each ware 18 stocked on to a relative shelving, shelf, container etc.. 17 is marked for being then identified singularly, as it will be shortly described, and in turn each single shelving, shelf, container etc. 17 is provided with means for recognizing the presence or absence of each ware 18 stocked thereon, which means are realized as will be then described, and they are able to detect and to inform the present electronic checking system when each ware is picked up and placed onto the relative movable truck 15, and therefore that such shelving, shelf, container etc. has been emptied of this ware and therefore it requires that a new ware be stocked onto it. Furthermore, a video survey system is mounted in the aforesaid inner containing space 6, and is connected to the present electronic checking system and adapted to survey different areas of the same inner space, and such video survey system is constituted by a set of shooting devices such as video cameras and of possible displays opportunely placed, and in the example constituted by the video cameras 19 arranged as shown, and such shooting devices are adapted to effect the video recording of the movements of all persons who are transiting inside the entire inner space 6.

In the above specified inner space 6, a domotic system may be advantageously mounted in one or more areas of the same space, and connected in the present electronic checking system, which system may comprise for example lighting devices (marked with 20), some heating and cooling devices, a sound scattering and video plant, some checking plants for the passages of persons in the inlet and outlet areas, and managing plants for opening and closing of the movable gates 13 and 16 of the relative inlets and outlets, some managing plants for the movement of doors and windows frames (for ex. opening and closing of shutters) etc.(all these devices and plants aren't represented in Fig.1). The scope of this domotic system is to permit an energy saving, for example for checking turning on or turning off the inner lighting only in the moment of the passage of persons, in a manner to make the environment more comfortable and pleasant for the persons..

In the inner containing space 6 at least an electronic apparatus 21 is arranged, which is constituted and operates as it will be described and provided for recording the identifying data of each new client who intends to enter into the same inner space to purchase the wares, and after that the recording of the registry data of the client has been effected, such apparatus provides to release the specific identifying data assigned to this client, with which he may be recognized both during the passage through the access area 11, with the truck for transporting wares 15, for entering the self-service distribution areas of the inner space 6, and during the passage through the outlet area 12 with the movable truck 15 with all the purchased wares.

For recognizing each client who intend to enter into the supermarket, store, shop etc., at least an automatic electronic apparatus 22 for reading the identifying code of each client is arranged and fixed near every movable inlet gate 13, which also acts for recording the identifying code and operates as it will be hereinafter described.

Finally, near each movable gate 16 of the outlet area 12, in that there are arranged the cash desks and the cashiers for the payment of the wares purchased by the various clients, it is arranged at least an electronic reading and checking apparatus 23 constituted and operated as it will be described and provided to detect and to recognize the specific identifying data of each client, and the data of the quantity, type and prices of the wares purchased by this client, which have been simultaneously stored both in the client identifying data, and into the above mentioned electronic apparatus 23, as soon as the client had picked up a stocked ware and placed it into the movable truck 15, and the manner in that these data of the purchased wares have been memorized will be later described. Furthermore, before to pay the purchased wares, by means of such reading and checking apparatus 23 every client provides to verify that the data detected by this apparatus exactly correspond to the data of all the purchased wares, which have been memorized in its own identifying data. Thereafter, at the end of this check, and after having made sure that these memorized data correspond from each other, the client may effect the payment and goes out with the movable truck 15 from the supermarket, store, shop etc..

With particular reference to the Figs. 1-4 and also the Fig. 5, it is now described the electronic checking system for recognizing the clients, the wares and the prices to be paid for all the wares purchased by such clients, and such system is expressed in the form of a circuit block diagram of the various electric and electronic components of the same system.

This system operates by means of an information exchange in the form of radio-frequency signals coded in a digital mode between each component part, by using systems for generating, transmitting and receiving radio-frequency signals in digital mode comprising transmission and receiving antennas installed in the various component parts of every of such systems for generating, transmitting and receiving signals.

All these systems, as well as the types of radio-frequency signals which are used will be soon describe in detail. The present electronic checking system is substantially constituted by the following component parts:
- at least a central server 24 formed by at least a master or main microprocessor 25, and at least a RAM storage 26, which are interconnected and communicating to each other and supplied with a low DC voltage from the electric supply line, of which the master microprocessor 25 is set for generating, transmitting and receiving the informations, coded as radio-frequency signals in the digital mode, corresponding to the identifying data of all the various component parts of the checking system, of which the different types of used informations will be described in detail later on, said master microprocessor being also adapted to transmit the generated informations toward the various component parts of the checking system and to receive and process the informations coming from one or more of the component parts of the same system, by means of an electronic data processing system of traditional type, which may be for example constituted by the system with software Microsoft Windows Server, the system IBM A S 400, the system Unix etc.., however also other software systems for data processing may be employed for the operation of the present checking system, thus without departing from the protection sphere of the present invention. Such master microprocessor 25, furthermore, comprises a relational data base operating with technologies which may be the following :
- Microsoft SQL Server,
- Oracle,
- MySQL,
- DB2,
- PostreSQL,
- Informix,
however, also other types of technologies may be utilized for the same function, thus without departing from the protection sphere of the present invention.

In turn, the RAM storage 26, which may also be constituted by a storage of different type, is set for storing the informations which will be described and for exchanging these informations, through at least a BUS circuit 27 in the interior of the central server 24, with the master microprocessor 25 and, through a data communication system which will be described, also with the different component parts of the checking system with which the same microprocessor is from time to time put into communication; - A set of ware identifying means 28, each one formed by any electronic component adapted to identify the various distinctive parameters of each stocked ware, such as type, number, price and arrangement of the same ware, etc....

Each identifying means may be constituted by a suitable data medium such as for example an adhesive label, an adhesive disc, which are applied externally on to the ware, or by at least an USB pen drive of plastic material for storing the electronic coded data, or by other kind of devices adapted to store coded identifying data.

Each of the ware identifying devices 28, which is hereinafter named RFID (Radio Frequency Identification, or rather radio-frequency identification) is set for operating with radio-frequency signals coded in the digital mode and is identified, as above described, by marking (labelling) with labels or other identifying data mediums operating with a technology for generating and receiving such radio-frequency signals coded in the digital mode, and each label or identifying data medium for a determinate ware is suitable to be paired also with an optical detecting technology, such as for example the bar code, so as to be able to recognize even some particular characteristics which otherwise could be recognized with difficult with the sole technology with radio-frequency signals. Each label or medium produced for identifying the wares at the inlet of a warehouse of a determinate factory is provided with an univocal code, which is specific for the same factory, and each label or medium is equipped with informations relating for example to: the ware handling code, quantity and type of the handled ware, lot of handled wares, package type, etc.... The used label or medium are directly readable both by the operator and by a reader operating with technology with radio-frequency signals RFID and compatible with the identifying code of the label or medium, and the used RFID technology may be from time to time different depending on the reading and checking requisites which one intends to use. The data which are memorized in each identifying device 28 are encrypted for privacy reasons. From the moment in that each label or medium has been produced, it acquires the meaning of a stocked ware.

Each one of the ware identifying devices 28 is formed by a secondary microprocessor 29, at least a RAM storage 30 into which the encrypted identifying codes are stored, and at least an antenna circuit 31, adapted to transmit and to receive radio-frequency signals coded in the digital mode, and these component parts are connected operatively to each other.

Each one of the devices 28 constitutes one of the peripheral component parts interacting with the central server 24 and operating with these radio-frequencies and/or these standard protocols :
125 KHz - 134 KHz - and/or all the standard protocols ;
13,56 MHz through the protocols ISO 14443, ISO 15693 - ISO 18092 NFCIP and ISO 21841 NFCIP-2 ;
860-960 MHz through the protocol ISO 18000 ;
2,4 GHz and/or all the standard protocols ;
5,8 GHz and/or all the standard protocols ;
> 5,8 GHz and/or all the standard protocols.

Each one of these ware identifying devices 28 is arranged on to a shelving, a shelf, a container 17 etc.. and acts for marking a correspondent ware 18, which has been stocked in such position, in a manner that the arrangement position of the ware 18 and the presence or the absence of the same ware may be detected in real time, and that the coded informations of these situations of all wares 18 may be transmitted via radio-frequency to the writing or reading unities 32, which will be described, in a manner that these units 32 may transmit the received coded informations to the central server 24, the informations of which may be transmitted to and displayed in an additional peripheral component 33 operatively connected to the same server and placed in the main stocking warehouse of all wares of this supermarket, store, shop, etc., thus informing in real time the responsible operators of this main warehouse about the situation of the wares, under the condition in that in the case in which one or more wares are picked up from one or more shelving, from one or more shelves, containers, etc., such picking up is outright detected and transmitted to the central server 24, which provides to inform the responsibles of the effected pickings up, in order that such responsibles may immediately supply with new wares the shelving, shelves, containers, etc., which have been emptied., and that the central server 24 may receive the information about these supplies, by keeping up-to-dated the situation of all the wares stocked into the shelvings, shelves, containers, etc. ;
- a set of writing or reading units 32 for controlling the single ware identifying devices 28, each one of which is formed by at least a second secondary microprocessor 34, at least a RAM storage 35 and one or more antenna circuits 36, 37, 38, adapted to transmit and to receive some radio-frequency signals coded in the digital mode, which are connected operatively to each other and interact with the antenna circuits 31 of the ware identifying devices 28 as well as with the master microprocessor 25 of the central server 24, in order that these antenna circuits 36, 37, 38 may receive at one hand from the preceding antenna circuits 31 the informations of the wares which are present and of those ones which are from time to time picked up from the relative stocking position, with the informations of the names of the clients who have picked up them, which are coded and read as will be described, thereby transmitting all these coded informations to said master microprocessor 24, where they are stored into the relative storage 26, so that in response to these coded informations which have been received and stored said master microprocessor 24 provides for processing these informations, by identifying and calculating the types and quantities of the wares which have been picked up, and by adding the prices of all the purchased wares, with the coded name of the relative purchaser client, and all the so processed informations are transmitted by the same master microprocessor 24 to each one of said reading and checking apparatuses 23, situated in the outlet area 12, into which these informations are stored and then may be checked by the client and the cashier during the phase of ware payment, as will be described later on. In the considered example, each one of the writing or reading unit 32 is named RFID unit, and constitutes another of the peripheral components interacting with the central server 24, and operating with the same radio-frequencies and/or the same standard protocols of the identifying devices 28, as above described. Each one of said writing or reading units 32, which may be arranged in different position in the inside of supermarket, store, shop etc., moreover, operates with an information transmitting system which is adaptable with the following specifications for hardware systems : RS 232, RS 485, RS 422, USB, Ethernet, Bluetooth, Wireless 802.11 a, b, g, n.

These antenna circuits 36, 37, 38 of the units 32, moreover, may transmit to the antenna circuits 31 of the various identifying devices 28 some coded informations which have been set (namely "written") directly in the relative writing or reading unit 32, in a manner that these coded informations are received by the ware identifying devices 28, and stored into the relative storage 30, and are received as well by said master microprocessor 24 which, based upon the instructions contained into the informations, may so provide to control the practical carrying out of the same instructions. By way of example only, it is possible to mention the fact of changing the specific identifying code of one or more stocked wares, by setting up the new identifying code into the component parts of the writing or reading unit 32 and by transmitting from these latter the new identifying code to the ware identifying devices 28 and to the master microprocessor 24, and under this condition this latter will provide to process the new coded informations which have been received for carrying out the above described same operations for calculating the types, the quantities and the prices of the wares which have been picked up and purchased. The antennas which are used may be in a number, shape and size depending from the specific use, from the application position and the manufacturing technology and might be arranged on the air, in the interior of walled structures, or on the floors. Furthermore, such antennas are connected operatively with the relative RFID unit 32 through connections of per se known kind, depending on the physical and electrical characteristics (impedance etc...) as well as the constructive technology of the same RFID unit;
- printers 39, adapted to print on to the wares identifying devices 28 in a readable form the informations for the visual recognizing of the stocked wares and of those in the warehouse, and the technical characteristics of the same wares, and constituted by a set of electronic components defining an outer receiving module 40, a printing module 41, a ware identifying module 42 and an antenna 43, which are interconnected to each other and supplied with a low DC voltage. The visual recognizing informations are set into the units 32 and transmitted from these latter by means of radio-frequency signals coded in the digital mode, which are received by the outer receiving module 40 of the printer, through the antenna 43, which module is interacting with the printing module 41 of the printer, which provides for writing namely marking in a visible way the set identifying codes in the relative ware identifying devices 28, and by storing then these identifying codes into the relative storage of such ware identifying module 42 and the storage 30 of the same identifying devices 28. The printers 39, named RFID printers (Radio Frequency Identification), are set for operating with the same frequencies and/or the same protocols described for the ware identifying devices 28, and may utilize preferably but not necessarily the following printing technologies : thermic transfer, direct thermal contact, inkjet, laser, such technologies being all of per se known type ;
- an electronic recording apparatus 21 of the identifying data of each client. This apparatus is constituted by a traditional electronic computer such as a personal computer, situate near each cash-desk of the supermarket, store, shop etc...and performing also the function to check the wares purchased by the clients and the relative prices, with the criteria which will be described, such apparatus comprising a monitor 44, a keyboard 45 for entering data, a mouse 46 and an external communication module 47, formed by receiving and transmitting circuits, adapted to transmit and to receive some radio-frequency signals coded in the digital mode, through one or more antenna circuits. This electronic apparatus 21, in particular, serves to record the identifying data of each new client who is devoid of identifying cards, or of any other pre-existing data medium, in which there have already been inputted the identifying codes of the same client. Then, in this case the recording of the identifying data of each new client is effected by entering such data in the computer through the keyboard 45 and the mouse 46, and by displaying the same through the monitor 44. The entered data are : name and surname and address, fiscal code and any possible IBAN bank code (if physical person), or name and address and VAT number and any possible bank code (if Firm), and any other further possible data.

These data are needed for identifying each single client and are stored in an appropriate personal and portable data storage medium 48, which the client receives from the supermarket, store, shop etc..., which is constituted by a magnetic card 49, a smart card 50, a RFID personal identifying device 51, made and operating like said ware identifying devices 28, or by an electronic data storage medium with biometric data such as for example the finger-prints, the form of the eye pupil etc.., or by suitable electronic data storage mediums of other kind, and this data storage medium 48 will be hereinafter named "Badge" for simplicity.

In each badge 48 of a new client, moreover, there are entered also a specific identifying code, the name and surname of the physical or juridical person which is owner of the badge, the method for detecting and identifying the badge provided by the supermarket, store, shop, etc., and the presence state of the client for the purchases, and any other possible data.

The loading of all data of each client into the badge 48 is carried out for example through a BUS line 52 connected between the electronic recording apparatus 21 and the same badge, or through the transmission of radio-frequency signals coded in digital mode.

At the same time, all the data loaded into the badge 48 of each client are automatically transmitted from the electronic recording apparatus 21 to the central server 24, through a transmission of radio-frequency signals coded in digital mode from the external communication mode 47 of the electronic apparatus 21 to the master microprocessor 25 of such server and from this latter such data are stored into the RAM memory 26 of the same server.

Moreover, such identifying data of each client are transmitted by the electronic apparatus 21 also to both the electronic automatic reading apparatus 22, which will be described, and that is arranged near each movable access gate 13, as well as to such electronic automatic reading and checking apparatus 23, which is arranged near each movable gate 16 of the outlet area 12 and which will be described in detail, and the transmission of these identifying data from the apparatus 21 to the apparatus 22 is carried out through the BUS line 52, if the same is provided to connect the electronic apparatuses 21 and 22, and on the contrary if such BUS line 52 isn't provided, this transmission of data from the apparatus 21 to the apparatus 22 is carried out through the transmission of radio-frequency signals coded in digital mode. Similarly, the identifying data of each client are transmitted to the reading apparatus 23 either through a possible BUS line 53 connected between the apparatuses 21 and 23 or, if such BUS lines doesn't exist, through transmission of radio-frequency signals coded in digital mode.

If each new client is already in possession of a badge 48 of any kind as for example a smart card containing all the identifying data and one specific identifying code of the client, which data are coded in a compatible mode to be read and recognized in the access area 11 of the supermarket, store, shop, etc., then it is necessary that these pre-recorded data be read at first by the electronic automatic apparatus 22, by inserting the badge 48 of the client into the reading area of such automatic apparatus 22, thereafter the data read by this latter are entered into the electronic apparatus 21, which so provides instantly to transmit these identifying data of the client to the master microprocessor 25 and to the storage 26 of the central server 24, and afterwards as soon as such stored data are recognized by the master microprocessor 25, this latter provides for controlling the opening of the access movable gate 13, thereby allowing the access of the client with the possible movable truck 15 inside the supermarket, store, shop, etc.;
- an electronic automatic apparatus 22 for reading and possibly recording the identifying code of each client, which is substantially constituted by a magnetic reader 54, a smart card reader 55, a biometric reader 56 namely a reader of some peculiar biological characteristics of each person, such as for example the finger-prints, the shape and/or size of the iris etc.., by a RFID unit 57 identical to and performing the same function of said RFID units 32, and by any other possible component parts.

In this manner, the reading of the identifying data stored into the badge 48 of each client is effected by either one of the readers 54, 55, 56 of the reader apparatus 22, depending on the kind of coding the data into the same badge, while the RFID unit 57 provides for transmitting or receiving coded informations toward or from the various component parts of the present electronic checking system through radio-frequency signals coded in the digital mode.

Therefore, each badge 48 of the client is checked by the relative automatic apparatus 22 and the identifying data read by such badge are instantly transmitted to the central server 24 and, if such identifying data are recognized by the master microprocessor 25, this latter provides in response for controlling the access movable gate 13 to allow the access of the client, with the possible movable truck 15.

On the contrary, if such identifying data aren't recognized, the access of the client isn't allowed, so that the client must provide to record its identifying data directly with this electronic apparatus 21, as in precedence described, or with the other electronic apparatus 22, which in this case performs also the function of recording the data on to the badge of the client, and such data are entered always with the apparatus 21. Under this circumstance, it is then necessary at first to insert the badge 48 of the client into the area of data reading and recording of the apparatus 22, and then to enter through the apparatus 21 the identifying data of the client, including his specific identifying code, so that the apparatus 21 provides for transmitting these data to the apparatus 22, in the already described mode, which are thus recorded and stored into either one of the readers 54, 55, 56 of the apparatus 22. Consequently, such data are automatically recorded, in addition into the apparatus 22, also into the badge 48 of the client, and transmitted to both the central server 24 and the reader apparatus 23, as in precedence described.

Therefore, after this recording the badge 48 of the client which is inserted into the apparatus 22 will be recognized by the microprocessor 25 of the central server 24, and therefore also by the apparatus 22. The present electronic control system is also constituted by the following component parts:
- at least a domotic system 58, comprising lighting devices 20, air-conditioning plants 59, checking plants 60 of the passage of persons (namely, the inlet and outlet gates 13 and 16), video survey plants 61, musical sound scattering plants 62, and also other plants normally installed such as for example heating devices, etc., which are not represented into the attached diagram.

The functions and the advantages of the domotic system 58 have been also described previously. Moreover, such domotic system 58 is connected operatively to the master microprocessor 25 of the central sever 24, through a possible BUS line 63 for transmitting via cable some electric signals coded in the digital mode, for checking the operation of the cited devices and plants, and such transmission may be also effected by radio-frequency signals coded in the digital mode, which are generated and received by a video server, connected operatively with said video survey plants 61 and set for recording in real time the activity of the persons shot by such video survey plants, of which the radio-frequency signals generated by the video server are transmitted to the master microprocessor 25, and the correspondent response signals of such master microprocessor 25 are received by the video server by utilizing a standard protocol and preferably the TCP/IP protocol with the Ethernet or wireless mode, and this in order to check the operation of these devices and plants of the present electronic checking system.

In this domotic system 58, the different operative programs to be performed are stored in advance into the storage 26 of said master microprocessor 25 of the central server 24, as informations coded digital mode, and these programs are selected singularly or collectively by suitable selector keys (not shown), contained into the domotic system 58 and actuatable by the personnel, and each program selected from time to time is so recognized by the master microprocessor 25, which provides for checking the operation of the relative devices and plants, for performing the same program. - an electronic reading and checking apparatus 23, situated near each outlet area 12, and adapted to read the badge 48 of each client with all coded data, stored into the same badge, of all kind, quantity, type and prices of the wares purchased by the same client, for displaying all these data and so allowing the payment of the wares at the various cash-desks.

The electronic reading and checking apparatus 23 is realized and operates in the identical mode of the electronic apparatus 22 as above described, and therefore is also constituted by the same readers 54, 55, 56 and the RFID unit 57. In this case, however, the difference between the apparatus 22 and the present apparatus 23 consists in that in the first case the apparatus 22 serves to check the recognizability of the badge 48 of the client, in addition to record in case also the data of a new badge, in the manner above described, and such identification of the badge is performed before the client has provided to purchase some ware, that is to say without the coded data of the wares have been stored in the same badge, while the present apparatus 23 serves both to recognize the badge of the client and the coded data of the wares purchased the same client and stored in the own badge, in order to be able to perform the above mentioned operations for paying wares at the cash-desks. Following, it is described how the wares are marked, identified and located in the warehouse, where the marked and identified wares are stocked in the interior of the supermarket, store, shop, etc., how the identifying data of the stocked wares and of their arrangement are recognized, how the stocked wares picked up by the client from the stocking positions are identified and stored into the badge 48 of each client, and how the data stored into the badge 48 of each client are transmitted and displayed into the reading and checking apparatus 23, for the payment of the same wares at the cash desks. When the wares enter the warehouse, supplied by various suppliers, into the database of the master microprocessor 25 of the central server 24 there are recorded the types and quantities of the articles of wares which are arrived, as well as the price of such articles, the arrangement of the articles in the warehouse and other possible specific data of the same articles, and these operations are performed acting on the peripheral component part 33, into which all the above described data have been entered and transmitted to the master microprocessor 25 with the established identifying codes of the different articles, and which are stored in advance into the storage 26 of the central server 24.

The ware articles arriving into the warehouse are normally contained into traditional chests and containers, which are drawn by the powered trucks and moved into the various inner areas of the warehouse up to the relative arrangement and stocking places of such chests and containers.

To identify each chest and container with the relative articles contained therein, and the arrangement and stocking places of the same into the warehouse, such containers and chests are marked with the same above described mediums for data identifying of wares (labels, adhesive discs, electronic keys, etc.), in which are contained the informations containing the electronic coded data regarding the types and the quantities of the chests and containers, and also the articles contained into the same and their stocking arrangements in the various warehouse areas, and these informations are contained into said ware identifying devices 28. These electronic coded data are marked as it will be soon described on to the mediums of such identifying devices 28, and their reading is performed through a correspondent detecting unit 64, arranged in the position of stocking the ware and is constituted by at least by an electronic transmitting and receiving circuit (as for example an antenna) adapted to transmit and to receive radio-frequency signals coded in digital mode, and such detecting unit 64 is compatible with the coded signals produced and transmitted by the antenna circuit 31 to each identifying devices 28, and in turn it provides for transmitting the radio-frequency signals, received from such antenna circuit 31, toward the microprocessor 25 and the storage 26 of the central server 24, with further displaying of such radio-frequency signals through the peripheral electronic component part 33 connected operatively with the central server 24. In this manner, through the peripheral electronic component part 33 it is possible to check continuously and instantaneously the movement and arrangement, and the presence or absence of different wares in the warehouse.

Advantageously, the ware arrived into the warehouse may also be moved, in addition to the use of the chests and containers described as above, also with the use of appropriate equipped trucks 65, in which the wares are placed, and which are provided of the same reading and writing RFID unit 32 as above mentioned, which are foreseen to read in the same way the coded informations of the wares which are displaced and arranged in the relative warehouse stocking positions, and for transmitting and displaying these readings always through the electronic peripheral component 33, with the same above described criteria. Besides, each equipped trucks 65 containing the ware may also be weighed, by passing on to proper weighing points of traditional type, installed into the warehouse, and the respectively detected weights are turned into coded data entered in the RFID units 32, which are displayed and checked always through the same electronic peripheral component 33, with the same operative criteria.

For practicality, such chests and containers of wares as well as equipped trucks are here named Movement Unit (UM) and are identified with a specific identifying code applied onto the relative data mediums and which for practicality is here named SSCC code (Serial Shipping Container Code).

In the practice, each one of the used data mediums is provided with an univocal identifying code for each Firm and contains, in addition to the above described informations, also some informations regarding, for each chest and container, and also equipped truck:
movement code, movement quantity, movement batch, type of packaging, etc...

The marking of the coded data on the data medium is effected by acting on to the peripheral component 33, in which all the coded data are entered and transmitted to the master microprocessor 25, with the established identifying codes stored in advance into the storage 26 of the central server 24. Thereafter, these coded data of the ware articles are transmitted by the microprocessor 25 to the relative external receiving module 40 of one or more RFID printers 39, situated into the warehouse, and the transmission of these informations is effected through radio-frequency signals coded in digital mode and, in response to the received informations, each RFID printer 39 provides for printing such coded informations on to the relative ware identifying devices 38, which are arranged near the same printer.

In this manner, through the peripheral component 33 there are displayed all the coded identifying data of all the chests and containers of wares as well as of all the equipped trucks, and of their stocking arrangement into the warehouse, and these data are read with the above described criteria. When the wares are picked up from the chests, containers, etc., for being exhibited into the relative shelvings, shelves, containers 17 etc. of the inner space 6, all the wares picked up from the warehouse are identified and counted through the peripheral component 33 and are so deducted from the quantities of wares stocked into the warehouse, and such wares are then transferred to and put down in the preset stocking positions. Also in this case, so, it is necessary to apply on the wares the relative identifying codes of wares 28 through the RFID printers 39, with the same modalities above described, which codes locate also the position of wares in the respective exhibition area. These data are transmitted by the antenna circuits 31 of the relative RFID devices 28 and received by the antenna circuits 36, 37, 38 of the reading units 32, which are arranged near the same wares, so that the coded data read by these units 32 are transmitted as above specified to the microprocessor 25 of the central server 24, which stores them into the storage 26, and under this condition the central server 24 is able to identify without no one error all the identifying devices 28 of all the exhibited wares, thereby resulting arranged for signalling both to the warehouse and to the cash desks, in the manner will be described, any wares which is picked up for being purchased. Now it is described the manner in which there are identified the wares which are picked up from shelvings, shelves, containers, etc. 17, during the different operating phases schematically illustrated by the Figs. 2, 3 and 4, in which a client enters into the inner space 6 through the access area, within a movable transporting truck 25 (see Fig.2), such client has picked up one or more wares to be purchased from a shelving, a shelf, a container, etc. 17 (see Fig.3), and he is passing through an outlet area 12 (see Fig.4) in which the wares are paid at the correspondent cash desk. Then, in the access phase into the inner space 6 of Fig.2, the client introduces his badge 48 into the reading area of the automatic apparatus 22, which therefore recognizes the identifying code of the same client and controls the opening of the inlet movable gate 13, so that the client may enter into the inner space 6 with the possible movable truck 15.

In this case, such movable truck 15 may be devoid of or provided with the identifying code, so that in the first case it isn't required the recognizing of the truck by the automatic apparatus 22, in that being the truck an equipment of the client, it is sufficient that this latter only be identified by the automatic apparatus 22, for identifying automatically and subsequently the movable truck too.

On the contrary, in the second case such movable truck 15 may be recognized by the automatic apparatus 22 through a specific identifying code which is assigned to it, in the moment of the access of the client into the inner space 6, or in the moment in that into the badge 48 of the client its specific identifying code is recorded, as above described.

The identifying code of the movable truck 15 may contain following indications:
truck code, client to whom the truck is referred, identifying code of the badge of the client who is transporting the truck, ware articles put down on the truck, etc...

Advantageously, the reference indications to the movable truck picked up by the client are recorded as electronic data coded in digital mode into the badge 48 of the relative client, and this recording of data may be effected, as for the badge of the client, through the electronic recording apparatus 21 or through transmission of radio-frequency signals coded in the digital mode, and also through the recording apparatus 22 by entering the data always through the recording apparatus 21. The recording of the identifying code of the movable truck 15 may be effected both with the printers 39 and with any other suitable electronic data recording system of traditional type. An example may be constituted by the fact to enter into the badge of each client the virtual optic symbol of the truck, and to assign from time to time to this virtual symbol a specific identifying code.

If the available movable trucks 15 include readers of electronic data coded with particular codes, the recording of the identifying data of each truck must be effected, as above described, in addition that into the badge 48 of the client, also into the reader of the same truck. Then, under this condition, in that all the identifying data of the client (and in case also of the movable truck 15) have been transmitted by the electronic reading and recording apparatus 22 to the master microprocessor 25, this latter arranges itself on the one hand for recognizing all the operations which will be effected by this specific client into the inner space 6, and on the other hand for controlling the operation of all the component parts of the domotic system 58 when the client will pass near the same. Now relating to Fig.3, shown therein is the phase in that the client with the possible movable truck 15 has entered the inner space 6 of the supermarket, store, shop, etc., and under this condition the domotic system 58 is controlled by the master microprocessor 25 to activate the component parts near which the client is passing, while the client continues to move himself into the inner space for viewing and choosing the wares to purchase.

In this Figure, furthermore, it is noticed that after the client has done his choice, he is picking up from a shelving 17 a determined ware to purchase, for putting then it down on the truck 15, which ware is identified through a relative said identifying device 28. Let's now suppose that the client is sure to purchase this ware, and doesn't intend more to place it in the stocking position into the shelving 17. As soon as the ware has been picked up from the shelving 17, the secondary microprocessor 29 of the identifying device 28 signals the displacement of this ware from the stocking position thereof, by generating instantaneously an electric signal, which is sent to the antenna circuit 31 of the same identifying device and transmitted from this latter as radio-frequency signal coded in digital mode to the secondary microprocessor 34 of the closest reading unit 32, which signal contains the coded informations of the type, quantity and price of the ware, and also of the stocking position of the same ware and, in response to receiving this radio-frequency signal, the microprocessor 34 generates a radio-frequency signal coded in the digital mode containing these informations, which is transmitted instantaneously through the antenna circuits 36, 37, 38 of the reading unit 32 to both the master microprocessor 25 and the storage 26 of the central server 24, and to the RFID personal identifying device 51 of the badge 48 of the client, and to the electronic reading and checking apparatus 23. Under this condition, while the secondary microprocessor 34 provides also to read directly and to decode the electronic data contained in the electronic reader of the movable truck 15, which are identifying the truck and the wares put down from time to time into the same truck, by transmitting correspondent radio-frequency signals coded in the digital mode to the above described master microprocessor 25 and the storage 26, the RFID personal identifying device 51 provides for transmitting to the unit 32 some radio-frequency response signals coded in the digital mode, which identify the identifying code stored in the badge 48 of the client, and which are promptly transmitted to the unit 32 of the master microprocessor 25 and to the storage 26, and in this way such client identifying code is associated in the microprocessor 25 and the storage 26 with the type, quantity, price and stocking position of the ware which has been picked up.

In other words, with these exchanges of electronic coded informations, the master microprocessor 25 is able to recognize all the wares picked up and the client who has effected the pickings up, and all the wares picked up and the relative prices of the same wares are progressively stored in an electronic transport document, which is formed in the storage 26 of the master microprocessor 25 and the badge 48 of the client and the electronic reading and checking apparatus 23, and these data are displayed through the electronic apparatus 21 connected operatively to the apparatus 23.

In particular, into the above-mentioned transport document there are stored all the types, and the quantities of the wares picked up and the relative prices thereof, which are then added up to each other and originate the total amount to pay at the cash desk. Such transport document may be then examined in detail by the client through the reading and checking apparatus 22, as it will be described later on. Therefore, with this transport document it isn't more necessary to record at the cash desk any type and quantity of ware purchased by a determined client, as well as to include the price of the same ware, since the indications of the wares and the calculation of their single and total prices are effected automatically and exactly, without possibility of error, in the manner previously described.

Let's now suppose that the client who intended to purchase a ware and had picked it up from the shelving 17 changes opinion and comes back to place the ware on to the stocking position of the same shelving. Then, under this situation, while the initial picking up of the ware had activated the set of above described operations, in which the lack of the ware from the shelving 17 was detected, the fact to place the ware again on to the same stocking shelving entails the recognizing of the ware identifying device 28 by the master microprocessor 25 of the central server 24, through the unity 32, and therefore the presence of the same ware still on to the same shelving and, after having effected such recognizing, the master microprocessor 25 provides instantaneously and automatically for signalling this condition of presence of ware, through the unity 32, also to the reading and checking device 23, to the badge 48 of the client, and to the electronic reader of the movable truck 15, thereby deleting from these component parts all the coded data of this ware, which were previously stored as described, and restoring therein the original condition prior the picking up of the same ware. The lacking or the presence of the ware 18 from a determine stocking shelving 17, which are detected as described by the master microprocessor 25, then, supposes that such master microprocessor 25 be set in advance to detect these conditions for all the wares 18 stocked on to all the shelvings 17, and in response to the detecting of either one of these conditions it provides respectively for controlling the carrying out of the above described operations and displaying this condition through the peripheral component part 33 connected operatively with the same master microprocessor. Then, in the case in which, through the peripheral component part 33, it is detected and displayed the lacking of the wares from a relative stocking shelving 17, the operator provides for informing the warehouse personnel about this lacking of the ware, by requesting its replacement with a further identical ware picked up from the warehouse and to be arranged on to the same shelving 17. Turning now to the Fig. 4, shown therein is the phase in that the client with the possible movable truck 15 and with all the purchased ware is passing through the outlet area 12 of the inner space 6, where the data relative to the purchase are necessarily inspected by the cashier and optionally also by the client, in the case in which he intends at first to check the exactness of all the effected purchases and the relative prices of the purchased wares, and thereafter to pay at the cash desk. Under this condition, all the purchased wares and their relative single and total prices have been already stored as described previously into the electronic transport document of both the reading and checking apparatus 23 and the badge 48 of the client, so as for reading these data stored into these component parts it is necessary at first to introduce the badge 48 of the client into the reading area of the reading and checking apparatus 23, which so identifies the client and all the purchased wares with the relative prices, and the possible movable truck 15 equipping the client, and these data are displayed in the monitor 44 of the electronic apparatus 21, which is connected operatively with said reading apparatus 23, and is available for the cashier for the relative payment of the client. In turn, if the client intends to check that the data stored into his badge 48 correspond exactly with the data stored into the apparatus 23 and displayed into the above monitor 44, it is necessary that he acts on to a suitable interface associated to and/or included into the same apparatus 23 and connected operatively thereto. Such interface may be made of any kind and is provided with one or more selecting push-buttons, and may be constituted for example by a keyboard (not shown) with touch-sensitive push-buttons included into the apparatus 23, so that by actuating the specific push-button of the keyboard there are displayed the stored data on to a monitor (not indicated) of the same keyboard or of this apparatus 23, and these displayed data may be so compared with the data displayed into a monitor included into the badge 48.

By means of the above mentioned interface, the client may also effect some other operations, by actuating the respective selecting push-buttons of the keyboard, as for example to confirm the exactness of the data contained into the electronic transport document and to print this latter onto a paper medium to be brought with oneself, or to read again the complete list of the purchased wares or, in the case, to require the intervention of the personnel for any objection or correction to be made to the stored data, and this before to pay the purchased wares.

In this case, such interface may be manipulated also by other clients for the same functions, if the supermarket, store, shop, etc. foresees the possibility to give hospitality to a plurality of clients at the same time. In the outlet area 12 of the inner space 6 it is furthermore provided at least an electronic scale 66 for weighing the wares and checking, if desired, that the weights indicated onto the wares and therefore also the relative prices of the same wares are correct. Such electronic scale 66 is constituted by a weighing module 67 and a transmitting and receiving system 68 for radio-frequency signals coded in the digital mode, of which the weighing module 67 is connected to the weighing mechanisms of traditional type included into the scale and to a monitor (not indicated) for displaying the weight of the weighed wares, and the transmitting and receiving system 68 is connected operatively to the weighing module 67 and to the master microprocessor 25 through the unit 32, and said system 68 is adapted to transmit the coded data of the weight of the wares detected from time to time to the master microprocessor 25, and to receive from this latter, through the module 32, and in response to each weighing which has been effected, the coded data of the measured weight and the identifying code of the badge 48 of the client and in case also of the movable ware transporting truck 15, for reading directly these measured data in the monitor of the weighing module 67. Under this context, the coded data in response to the weighing are transmitted from the master microprocessor, through the module 32, also to the reading and checking apparatus 23, and are displayed by the apparatus 21 available for the cashier.

In this manner, in the case of discrepancies which are detected and of objections by the clients regarding the measured weights and displayed into both the electronic scale 66 and the apparatus 21, during the payment at the cash desk the prices of the wares may be kept up-to-dated correctly on the basis of the real weights measured of the wares.

For recognizing each phase of the payment which has been effected, the master microprocessor 25 is set in advance for receiving and recognizing as it will be described the coded data of the carrying out of this operation and for issuing a correspondent sale document, which is the final transport document with all the correct data of the wares and their single and total prices, and which is delivered to the clients. In this manner, at the end of the payment of the wares purchased by each client, by using the apparatus 21, the coded data of the ended sale are transmitted by the apparatus 21 to the reading and checking apparatus 23, which in turn transmits them through the unit 32 to the master microprocessor 25, and this latter as soon as has received and recognized these coded data of the ended sale, provides for controlling on the one hand the issue of said sale document by the reading and checking apparatus 23, by enabling also the movable gate 16 to open itself, and on the other hand it provides for erasing from the RAM storage 26 of the central server 24 all the data of the operations performed by the client, and of these ones relative to the movable truck 15, with consequent erasure of these data from both the reading and checking apparatus 23 and the badge 48 of the client.

In the case in which the present electronic checking system is installed in sale points equipped with the same described component parts, in which a sole client at the time provided with the badge 48 of the type described may have access, the apparatuses situated in the single outlet area of the sale points are advantageously equipped with the so-called outlet confirmation push-button and the rereading push-button, of which the outlet confirmation push-button is actuated for producing, after the payment of the wares with the same modalities as described above, the transport document namely the document of the already effected sale, which is delivered to the client, while the rereading push-button is actuated for performing the function of erasing all the data of the operations effected by the client and of those ones identifying the movable truck 15, with the same modalities as described above.

## Claims

1. System for checking, processing and managing electronically data for recognizing wares of various kind and the clients purchasing them into supermarkets, stores, shops and the like of the self-service type, and for checking if all the wares purchased by such clients have been paid, wherein each supermarket, store, shop etc.. comprises at least an inner containing space (6) provided with at least an access area (11) and an outlet area (12), which are accessible through movable gates (13) or similar elements for the clients (14) and any possible movable ware transporting truck (15), wherein into such inner space (6) there are provided several shelves, containers etc... (17) for stocking the different wares (18), which are situated on to different positions and with different arrangements, such wares being contained into at least a warehouse, **characterized by** main means for electronic checking and processing data (24), by means (28) for identifying the wares (18) stocked into the relative shelves, containers etc.. (17) and the warehouse, containing coded data for the electronic identifying of the wares and adapted to transmit and to receive radio-frequency signals coded in the digital mode ; by at least a writing or reading unit (32) for checking the single ware identifying means (28), adapted to read the coded data of the wares marked by said ware identifying means (28) and to transmit and to receive radio-frequency signals coded in the digital mode ; by printing means (39) adapted to receive radio-frequency signals coded in the digital mode, for printing on to said identifying means (28) the coded date for visually recognizing the stocked wares (18) and the wares disposed into the warehouse ; by electronic identifying means (badge 48) of each client, through specific data coded in the digital mode, which are loaded and recorded on to said electronic identifying means (48) and stored therein, for identifying and recognizing each client ; by first electronic means (21) for recording the identifying data of each client into the relative electronic identifying means (48), by transmitting and receiving of radio-frequency signals coded in the digital mode, or by transmitting and receiving them through a BUS line (52) ; by second electronic means (22) for recording the identifying data of each client into the relative said electronic identifying means (48), by transmitting and receiving of radio-frequency signals coded in the digital mode, said second electronic means (22) being also able to read the identifying data which have been stored into said electronic identifying means (48) of each client ; by electronic reading and checking means (23) adapted to read, by transmitting and receiving of radio-frequency signals coded in the digital mode, the coded identifying data of each client into said electronic identifying means (48) of the same client, together with the coded data of all the wares which have been purchased by such client, which have been entered into said electronic identifying means (48) and detected through said ware identifying means (28), for the payment of the wares on the various cash-desks, said electronic reading and checking means (23) being also adapted to allow the client to compare the data of the purchased wares with the correspondent data entered into said electronic identifying means (48) ; by video survey means (19) adapted to take, to record and to display all the movements of the persons into said inner space (6) ; at least a domotic system (58) in the inner space (6), comprising for example devices for illuminating, heating, for sound scattering, checking plants for the movable gates (13) or similar elements etc... ; and by weighting means (66) for the purchased wares, said electronic data checking and processing means (24) being connected operatively to said ware identifying means (28) through said writing or reading units (32), to said printing means (39), said electronic client identifying means (48), said first electronic recording means (21), said second electronic means (22) for recording and reading ; said electronic reading and checking means (23), said video survey means (19), said domotic system (58) and said weighting means (66), wherein said operative connection occurs by transmitting and receiving of radio-frequency signals coded in the digital mode ; said main means for electronic checking and processing data (24) being set for performing the following operative functions :
- recognizing, through said writing or reading units (32), and said first electronic means (21), the data coded in advance into said ware identifying means (28) and corresponding to specific wares, to be stocked on to the relative shelves, containers etc.. (17) of said inner space (6), in a manner to detect the presence or absence of the wares on to the relative arrangement positions ;
- recognizing of the wares arranged on to the relative arrangement positions in the warehouse, by means of electronic units (64) situated in the warehouse and at least a further electronic peripheral component (33), which is connected operatively (through a BUS line) to said electronic data checking and processing means (24), in order to detect the data coded into said ware identifying means (28) and corresponding to specific wares stocked in the warehouse, in a manner that said electronic units (64) transmit corresponding radio-frequency signals coded in the digital mode to said electronic data checking and processing means (24), so as to detect the presence or absence of the wares from the relative arrangement positions in the warehouse ;
- recognizing or not recognizing the identifying code of each client which has been stored into said electronic identifying means (48), respectively for enabling or not enabling the access and the outlet of each client with respect to said inner space (6) ;
- recognizing the wares stocked on to the shelves, containers etc.. (17), which have been or have not been picked up by each client, by reading said ware identifying means (28) through said writing or reading units (32), and transmitting the coded data detected by these latter to said first, second and third electronic means (21, 22, 23) as well as to said further electronic peripheral component (33) and said electronic client identifying means (48), under the condition in which the detection through said electronic data checking and processing means (24) of each ware which has been picked up from a determinate stocking position is displayed on to said first electronic means (21), for checking and calculating and paying the wares which have been picked up and purchased by the client, and the absence from the same stocking position of this ware which has been picked up is displayed on to said further electronic peripheral component (33), in order to inform the devoted personnel of the warehouse to arrange on to such emptied stocking position additional ware of the same type which has been picked up from the warehouse ;
- checking and comparing the wares which have been picked up and purchased by the client, and detected by said first and third electronic means (21, 23), with the indications of such picking up stored into said electronic identifying means (48) of each client, in order to verify if these indications agree or not agree among them and, in the case in which they do not agree among them, to bring the necessary corrections relative to the wares which have been actually purchased and the relative prices to be paid ;
- checking and comparing the declared weights of the purchased wares and the real weights of the same wares, which are measured by means of said weighting means (66) ;
- checking the operative or not operative conditions of said video survey means (19) and said domotic system (58).

2. System for the electronic data checking, processing and managing according to claim 1, **characterized in that** said electronic data checking and processing main means comprise at least a central server (24) formed by at least a master or main microprocessor (25) and at least a RAM storage (26), which are interconnected and communicating to each other and supplied with a low DC voltage from the electric supply line, of which the master microprocessor (25) is arranged for generating, transmitting and receiving the informations, coded as radio-frequency signals of the digital mode, corresponding to identifying data of all the various component parts of the checking system, said master microprocessor (25) being also adapted to transmit the generated informations toward the various component parts of the checking system and to receive and process the informations coming from one or more of the component parts of the same system, by means of an electronic data processing system of traditional type, which may be for example constituted by the system with software Microsoft Windows Server, the system IBM A S 400, the System Unix etc.., however also other software systems for data processing may be employed for the operation of the present checking system, said master microprocessor (25) comprising a relational data base operating with technologies which may be the following :
- Microsoft SQL Server,
- Oracle,
- MySQL,
- DB2,
- PostreSQL,
- Informix,
however, also other types of technologies may be utilized for the same function, said RAM storage (26) being able to be constituted also by a storage of different type and being arranged for storing the different informations which have been received and for exchanging these informations, through at least a BUS circuit (27) in the interior of said central server (24), with said master microprocessor (25) and also the different component parts of the checking system with which the same microprocessor is from time to time put into communication.

3. System according to claim 2, **characterized in that** said ware identifying means (28) are formed each one by any electronic component adapted to identify the various distinctive parameters of each stocked ware, such as type, number, price and arrangement of the same ware, etc..., and that each identifying means may be constituted by a suitable data medium such as for example an adhesive label, an adhesive disc which are applied externally on to the ware, or by at least an USB pen drive of plastic material for storing the electronic coded data, or by other kind of devices adapted to store coded identifying data, each one of said ware identifying means (28) (RFID, namely Radio Frequency Identification) being arranged for operating with radio-frequency signals coded in the digital mode and being identified by means of marking (labelling) with labels or other identifying data mediums operating with a technology for generating and receiving such radio-frequency signals coded in the digital mode, wherein each label or identifying data medium of a determinate ware may be paired also with an optical detecting technology, such as for example the bar code, so as to be able to recognize even some particular characteristics which otherwise could be recognized with difficult with the sole technology with radio-frequency signals, and **characterized in that** each label, medium etc.. produced for identifying the wares on the warehouse inlet of a determinate factory is provided with a code having only one meaning, which is specific for the same factory, and with informations relating for example to the ware handling code, quantity and type of the handled ware, lot of handled wares, package type, etc..., such ware identifying means (28) of the wares stored in the warehouse being readable directly by the warehouse operator or by said electronic units (64) situated in the warehouse.

4. System according to claim 3, **characterized in that** each one of said ware identifying means (28) is formed by a secondary microprocessor (29), at least a RAM storage (30) into which the encrypted identifying codes are stored, and at least an antenna circuit (31), adapted to transmit and to receive radio-frequency signals coded in the digital mode, and these component parts are connected operatively to each other, each one of said ware identifying means (28) being able to interact with said central server (24) and to operate with these radio-frequencies and/or these standard protocols : 125 KHz - 134 KHz - and/or all the standard protocols ; 13,56 MHz through the protocols ISO 14443, ISO 15693 - ISO 18092 NFCIP and ISO 21841 NFCIP-2 ; 860-960 MHz through the protocol ISO 18000 ; 2,4 GHz and/or all the standard protocols ; 5,8 GHz and/or all the standard protocols ;
> 5,8 GHz and/or all the standard protocols ;
and **characterized in that** each one of said ware identifying means (28) is arranged on to a shelf, a container (17) etc.. and acts for marking a correspondent ware (18) which has been stocked in such arrangement position.

5. System according to claim 4, **characterized in that** said writing or reading units (32) are formed each one by at least a second secondary microprocessor (34), at least a RAM storage (35) and one or more antenna circuits (36, 37, 38), adapted to transmit and to receive some radio-frequency signals coded in the digital mode, which are connected operatively to each other and interact with the antenna circuits (31) of the ware identifying means (28) as well as with said master microprocessor (25), in a way that these antenna circuits (36, 37, 38) may receive from the preceding antenna circuits (31) the informations of the wares which are present and of those ones which are from time to time picked up from the relative stocking position, with the informations contained into said electronic client identifying means (48), thereby transmitting all these coded informations to said master microprocessor (24), where they are stored into the relative storage (26), so that in response to these coded informations which have been received and stored said master microprocessor (24) provides for processing these informations, by identifying and calculating the types and quantities of the wares which have been picked up, and by calculating the prices of all the purchased wares, with the coded name of the relative purchaser client, and all these informations are transmitted by the same master microprocessor to each one of said third electronic means (23), each one of said writing or reading units (32) being available on different positions in the interior of the supermarket, store, shop etc..., and being operating with an information transmitting system which is adaptable with the following specifications for hardware systems : RS 232, RS 485, RS 422, USB, Ethernet, Bluetooth, Wireless 802.11 a, b, g, n, said antenna circuits (36, 37, 38) being also adapted to transmit to the antenna circuits (31) of the various said identifying means (28) some coded informations which have been set (namely "written) directly on to the relative writing or reading unit (32), in a manner that these coded informations are received by the ware identifying means (28), and stored into the relative storage (30), and are received as well by said master microprocessor (24) which, based on the instructions contained into the so set information, may so provide for checking the practical carrying out of the same instructions, said antenna circuits (36, 37, 38) might be made with a number, shape and dimension dependent from the specific use, the application position and the manufacturing technology and might be arranged on the air, in the interior of walled structures, or on to floors, said antenna circuits (36, 37, 38) being connected operatively with the relative said writing or reading unit (32) through connections of per se known kind, depending on the physical and electric characteristics (impedance etc...) as well as the constructive technology of the same unit.

6. System according to claim 5, **characterized in that** said printing means (39) are constituted by a set of electric components defining an outer receiving module (40), a printing module (41), a ware identifying module (42) and an antenna (43), which are interconnected to each other and supplied with a low DC voltage, wherein the visual recognizing informations are set into said writing or reading units (32) and transmitted from these latter by means of radio-frequency signals coded in the digital mode, which are received by said outer receiving module (40) of the printer, through the antenna (43), which module is interacting with the printing module (41) of the printer, which provides for writing namely marking in a visible way the set identifying codes in the relative ware identifying means (28), and then for storing these identifying codes into the relative storage of said ware identifying means (42) and the storage (30) of the same identifying means, said printing means (39) being arranged for operating with the same frequencies and/or the same protocols of said ware identifying means (28), and may utilize preferably but not necessarily the following printing technologies :
thermic transfer, direct thermal contact, inkjet, laser, such technologies being all of per se known type.

7. System according to claim 6, **characterized in that** said first electronic means are constituted by an electronic recording apparatus (21) constituted by a traditional electronic computer such as a personal computer, situate near each cash-desk of the supermarket, store, shop etc...and performing also the function to check the wares purchased by the clients and the relative prices, said electronic apparatus (21) comprising a monitor (44), a keyboard (45) for entering data, a mouse (46) and an external communication module (47) formed by receiving and transmitting circuits of traditional type, adapted to transmit and to receive some radio-frequency signals coded in the digital mode, through one or more antenna circuits, the recording of the identifying data into said electronic client identifying means (48) being effected by entering such data in the computer through the keyboard (45) and the mouse (46), and by displaying the same through the monitor (44), such identifying data comprising : name and surname and address, fiscal code and any possible IBAN bank code (if physical person), or name and address and VAT number and any possible bank code (if Firm), and any other possible data such as for example a special identifying code, the method for detecting and identifying said electronic identifying means (48), the presence state of the client for the purchases etc..., said electronic identifying means (48) being loadable with data even through a BUS line (52) interconnected between the same identifying means and said electronic recording apparatus (21), and the loaded data being transmitted from this latter to said central server (24) and said second electronic means (22), also through said BUS line (52), as well as being transmitted to said electronic writing and checking means (23) also through a further BUS line (53), connected between these latter and said first electronic means (21).

8. System according to claim 7, **characterized in that** said electronic identifying means are constituted by a personal and portable data storage medium (48), which the client receives from the supermarket, store, shop etc..., which is constituted by a magnetic card (49), a smart card (50), a personal RFID identifying device (51), made and operating like said ware identifying means (28), or by an electronic data storage medium with biometric data such as for example the finger-prints, the form of the eye pupil etc.., or by suitable electronic data storage mediums of other kind.

9. System according to claim 8, **characterized in that** said second electronic means comprise an electronic automatic apparatus (22) for reading and possibly recording the identifying code of each client, which is substantially constituted by a magnetic reader (54), a smart card reader (55) a biometric reader (56) namely a reader of some peculiar biological characteristics of each person, such as for example the finger-prints, the shape and/or size of the iris etc.., by a RFID unit (57) identical to and performing the same function of said writing or reading units (32), and by any other possible component parts, under the condition in which the reading of the identifying data stored into said electronic identifying means (48) of each client is effected by either one of the readers (54, 55, 56) of the reader apparatus (22), depending on the kind of coding the identifying data, while the RFID unit (57) provides for transmitting or receiving coded informations toward or from the various component parts of the present electronic checking system through radio-frequency signals coded in the digital mode, and to said master microprocessor (25) of the central server (24), and under this condition if such identifying data are recognized by the master microprocessor (25), this latter provides in response for checking the access movable gate (13), so as to allow the access of the client with the possible movable ware transporting truck (15), if on the contrary such identifying data aren't recognized, the access of the client isn't allowed, so that the client must provide to record its identifying data directly with this electronic apparatus (21), or with the other electronic apparatus (22), which in this case performs also the function of recording the data on to the badge of the client, and such data are entered always with the apparatus (21), which in turn provides for transmitting these data to the apparatus (22), which are so recorded and stored into either one of said readers (54, 55, 56) of this latter apparatus and also into said electronic identifying means (48), and such data are also transmitted to both the central server (24) and the reader apparatus (23).

10. System according to claim 9, **characterized in that** said domotic system (58) is connected operatively to said master microprocessor (25) through a possible BUS line (63) for transmitting via cable some electric signals coded in the digital mode, for checking the operation of the cited devices and plants, and such transmission may be also effected by radio-frequency signals coded in the digital mode, which are generated and received by a video server, connected operatively with said video survey means (61) and arranged for recording in real time the activity of the persons taken by such video survey means, of which the radio-frequency signals generated by the video server are transmitted to the master microprocessor (25), and the correspondent response signals of such master microprocessor (25) are received by the video server by utilizing a standard protocol and preferably the TCP/IP protocol with the Ethernet or wireless mode, wherein the different operative programs to be performed for said domotic system (58) are stored in advance into the storage (26) of said master microprocessor (25) as informations coded in the digital mode, and these programs are selected singularly or collectively by means of selector means of the domotic system (58), and each program selected from time to time is so recognized by the master microprocessor (25), which provides for controlling the operation of the relative devices and plants, for performing the same program.

11. System according to claim 10, **characterized in that** said electronic reading and checking means comprise an electronic reader and checking apparatus (23), situated near each outlet area (12) and constituted by the same readers (54, 55, 56) and the RFID unit (57) of said electronic apparatus (22), and is adapted to recognize said identifying means (48) of each client and the coded data of the wares purchased by the same client, so as to be able to perform the operations needed for the payment of the wares at the cash-desks.

12. System according to claim 11, **characterized by** equipped trucks (65) for arranging and handling the ware arrived into the warehouse, which are provided with said reading or writing units (32) foreseen to read the coded informations of the wares which are displaced and arranged in the relative warehouse stocking positions, and for transmitting and displaying these readings always through said electronic further peripheral component (33), each one of said equipped trucks (65) being able to be also weighed by passing on to proper weighing points of traditional type, installed into the warehouse, and the respectively detected weights being turned into coded data entered in the said reading or writing units (32), which are displayed and checked always through the same electronic peripheral component, each equipped truck (65) being identified with a specific identifying code applied on to data storage mediums, each one of them is provided with an identifying code having only one meaning for each Firm and accompanied also with informations relating for example to the handling code, quantity of handled wares, handled lot, package type etc..

13. System according to claim 12, **characterized in that** each movable ware transporting truck (15) may be marked with a specific identifying code, which is recognized by said automatic apparatus (22), and which may include the following indications :
truck code, client to whom the truck is referred to, identifying code of the badge of the client transporting the truck, ware articles arranged on to the truck, etc..., the recording of such identifying code being effected with electronic data coded in the digital mode into said identifying means (48) of the relative client, through said electronic recording apparatus (21) or through transmission of radio-frequency signals coded in the digital mode, and also through said recording apparatus (22) by entering the data always through said recording apparatus (21), and by utilizing said printing means (39).

14. System according to claim 13, **characterized by** at least an interface associated to and/or included into said reading and checking apparatus (23) and connected operatively thereto, adapted to check if the data stored into the identifying means (48) of each client coincide exactly with the data stored in the apparatus (23) and displayed into said monitor (44), said interface being made of any kind and provided with one or more selecting push-buttons, such as for example a keyboard with touch-sensitive push-buttons, included into the apparatus (23), so that by actuating the specific push-button of the keyboard there are displayed the stored data on to a monitor of the same keyboard or of said apparatus (23), and these displayed data may be so compared with the data displayed into a monitor included into said identifying means (48).

15. System according to claim 14, **characterized in that** said weighing means comprise, on the outlet area (12) of the inner space (6), at least an electronic scale (66) for weighing the wares and checking, if desired, that the weights indicated onto the wares are correct and therefore also the prices of the same wares are correct, said electronic scale (66) being constituted by a weighing module (67) and a transmitting and receiving system (68) for radio-frequency signals coded in the digital mode, of which the weighing module (67) is connected to the weighing mechanisms of traditional type included into the scale and to a monitor for displaying the weight of the weighed wares, and said transmitting and receiving system (68) being connected operatively to the weighing module (67) and said master microprocessor (25) through said unit (32), and said system (68) being adapted to transmit the coded data of the weight of the wares detected from time to time to the master microprocessor (25), and to receive from this latter, through the module (32), and in response to each weighing which has been effected, the coded data of the measured weight and the identifying code of the client identifying means (48) and in case also of the movable ware transporting truck (15), for reading directly these measured data in the monitor of the weighing module (67), under the condition in which the coded data in response to the weighing are transmitted from the master microprocessor (25), through the module (32), also to the reading and checking apparatus (23), and are displayed by the apparatus (21) available to the cashier.
